# EUROPEAN PATENT APPLICATION

(11) **EP 2 120 200 A1**
(43) Date of publication of application: **18.11.2009**
(21) Application number: 08721229.6
(22) Date of filing: 04.03.2008
(51) Int. Cl.: G06Q 30/00

(54) **DATA PROCESSING SYSTEM AND DATA PROCESSING METHOD**

(30) Priority: 13.03.2007 JP 2007063877
(71) Applicant: Sony Corporation, Tokyo 108-0075 (JP)
(72) Inventor: SUGAYA, Hiroshi, Tokyo 108-0075 (JP); YAEGASHI, Akira, Tokyo 108-0075 (JP); HAKOISHI, Takahisa, Tokyo 108-0075 (JP)
(74) Representative: DeVile, Jonathan Mark
(86) International application number: PCT/JP2008/053809
(87) International publication number: WO 2008/111423

(57) **Abstract**

Coupons can be easily distributed to users and, in the distribution, the illegal use of coupons is prevented. Advertisement video data embedded, by a watermark, with coupon ID data given to each coupon is generated, the advertisement video data embedded with the coupon ID data is reproduced by a display apparatus 30, advertisement image data is taken from the advertisement video data by a mobile phone apparatus 40, the taken advertisement image data is stored in a non-secure memory 42, terminal ID data stored in a secure memory 43 is embedded, by a watermark by a mobile phone apparatus 40, into the advertisement image data stored in the non-secure memory 42, the advertisement image data further embedded with the terminal ID data in addition to coupon ID data is displayed on the mobile phone apparatus 40, the advertisement image data displayed on the mobile phone apparatus 40 is detected by a redemption apparatus 70 at the time of redemption, the coupon ID data and the terminal ID data are extracted from this detected advertisement image data, the above-mentioned extracted coupon ID data and terminal ID data are transmitted to a data management apparatus 60, a database of this data management apparatus 60 is accessed, matching is executed with the coupon ID data transmitted from the redemption apparatus 70, and, if a match is found, the coupon data related with this coupon ID data is transmitted to the redemption apparatus 70.

## Description

### Technical Field

The present invention relates to a data processing system and a data processing method that efficiently distribute coupons by use of advertisement media and measure advertisement effects in situations where coupons are used.

### Background Art

While with systems, such as Internet click guaranteed advertisement and the like, advertisement effect measurement is enabled, distribution systems of broadcast type, such as telecasting and digital signage, are not popular in advertisement effect measurement systems. At present, the advertisement effect measurement is executed by techniques in which two-dimensional barcodes or additional information, such as telephone numbers and URL (Uniform Resource Locator) is shown on advertisement media, such as posters and advertisement video, for example, and techniques in which electronic coupons and the like are distributed along with advertisement content distribution. However, incorporating the additional information into advertisement content shorten the time in which a video advertisement is reproduced and causes the lowered quality of the advertisement content itself. Further, in distributing coupons, it is necessary to prevent the illegal copy of or the alteration of coupons.

Further, if carrier communication costs, such as a mobile phone apparatus and the like, occur in getting a coupon by the user, the incentive to the user will be lowered that much more.

It should be noted that the applicant hereof proposed Japanese Patent Laid-Open No. 2006-331398 as a prior technology associated with the present application.

The present invention has been made in consideration of the above-mentioned problems and an object of the present invention is to provide a data processing system and a data processing method that are able to easily distribute coupons to users and prevent the illegal use of coupons in distribution thereof.

### Disclosure of Invention

According to the present invention, there is provided a data processing system including: an advertisement data generation apparatus for generating advertisement data embedded, by watermark, with coupon ID data assigned to each coupon; a terminal apparatus having an advertisement media for providing the advertisement data embedded with the coupon ID data; a terminal apparatus having acquisition means for acquiring advertisement image data from advertisement data provided in the advertisement media, storage means for storing terminal ID data and the advertisement image data acquired by the acquisition means, image processing means for further embedding, by a watermark, the terminal ID data into the advertisement image data, and display means for displaying advertisement image data embedded, by a watermark, with the coupon ID data and the terminal ID data; a redemption apparatus having detection means for detecting advertisement image data displayed on display means of the terminal apparatus, extraction means for extracting the coupon ID data and the terminal ID data from the advertisement image data detected by the detection means, and redemption side communication means for transmitting the coupon ID data and the terminal ID data extracted by the extraction means and transmitting a log obtained at the redemption of a coupon related with the coupon ID data, thereby redeeming the coupon related with the coupon ID data; and a coupon management apparatus having a coupon database for managing the coupon data by relating with the coupon ID data, matching means for executing matching of coupon ID data transmitted from the redemption apparatus by accessing the coupon database, and management side communication means for transmitting, if a match is found by the matching means, coupon data related with this coupon ID data to the redemption apparatus.

Also, according to the present invention, there is provided a data processing method including: a step of generating advertisement data with coupon ID data embedded, by a watermark, given to each coupon; a step of providing, by an advertisement media, the advertisement data embedded with the coupon ID data; a step of acquiring, by an image taking means of a terminal apparatus, advertisement image data from advertisement data provided in the advertisement media and storing the advertisement image data into storage means in which terminal ID data is stored; a step of further embedding, by a watermark, the terminal ID data into the advertisement image data stored in the storage means by the terminal apparatus; a step of displaying, onto a display means of the terminal apparatus, advertisement image data further embedded with the terminal ID data in addition to the advertisement image data embedded with the coupon ID data; a step of detecting advertisement image data displayed on display means of the terminal apparatus by a redemption apparatus at the time of redemption and extracting the coupon ID data and the terminal ID data from the advertisement image data detected; a step of transmitting the extracted coupon ID data and the terminal ID data to a data management apparatus, accessing a database managing the coupon data by relating with the coupon ID data of this data management apparatus, and making a match with the coupon ID data transmitted from the redemption apparatus; a step of transmitting, if a match is found, the coupon data related with this coupon ID data to the redemption apparatus.

According to the present invention, advertisement image data is obtained by an image taking means of a terminal apparatus from advertisement data provided in an advertisement media, terminal ID data is further embedded, by a watermark, in the obtained advertisement image data, advertisement image data further embedded with terminal ID data in addition to advertisement image data embedded with coupon ID data is displayed on display means of the terminal apparatus, the advertisement image data displayed on the display means of the terminal apparatus is detected by a redemption apparatus at the time of redemption, namely, when a coupon is used by the user, the coupon ID data and the terminal ID data are extracted from this detected advertisement image data, the coupon ID data and the terminal ID data extracted by the redemption apparatus are transmitted to a data management apparatus, a database managing the coupon data by relating with the coupon ID data of this data management apparatus is accessed, a step of executing matching with the coupon ID data transmitted from the redemption apparatus, and, if a match is found, the coupon data related with this coupon ID data is transmitted to the redemption apparatus, so that, when the user acquires coupon ID data, no carrier communication cost is caused on the terminal apparatus, thereby allowing the easy distribution of coupons to users and preventing the illegal use of coupons because the coupon ID data and the terminal ID data are provided in watermarks.

### Brief Description of Drawings

[FIG. 1]

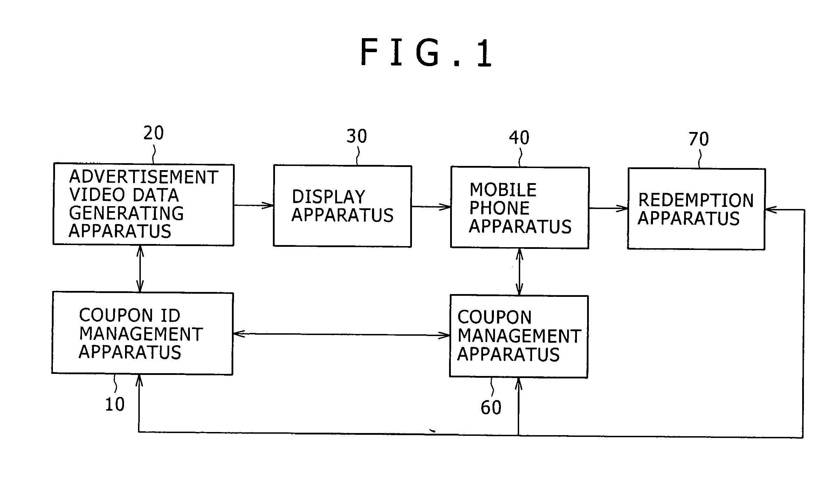

   FIG. 1 is a diagram illustrating a configuration of a data processing system to which the present invention is applied.
[FIG. 2]

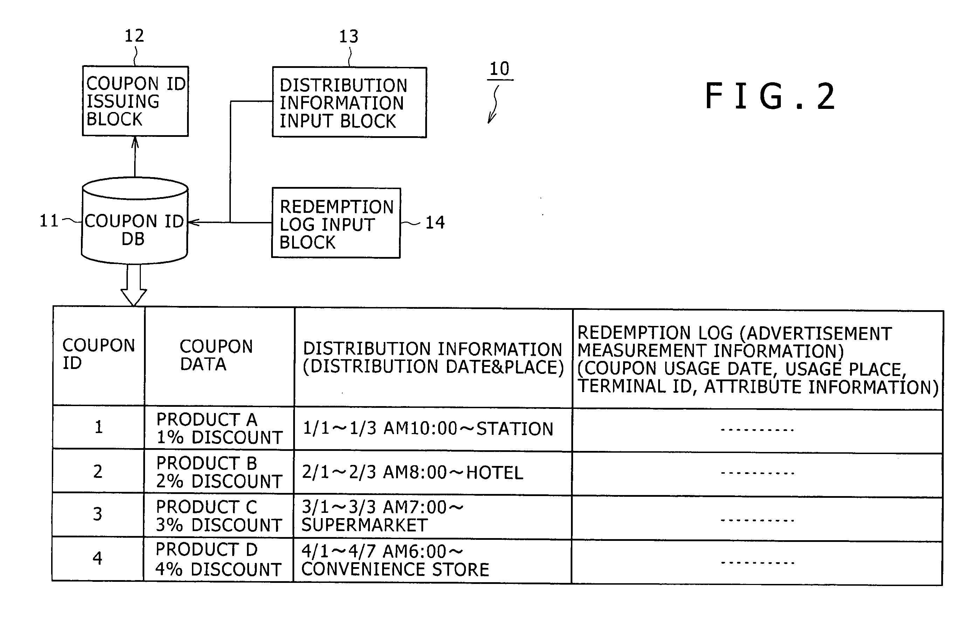

   FIG. 2 is a block diagram illustrating a coupon ID management block for use in the data processing system to which the present invention is applied.
[FIG. 3]

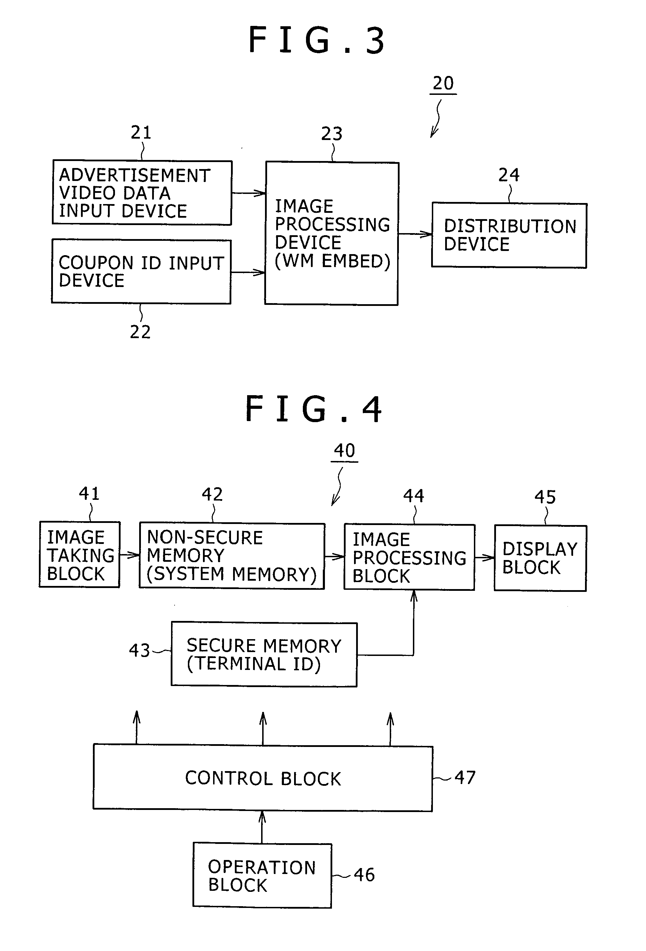

   FIG. 3 is a block diagram illustrating an advertisement video data generation apparatus for use in the data processing system to which the present invention is applied.
[FIG. 4]
   FIG. 4 is a block diagram illustrating a mobile phone apparatus for use in the data processing system to which the present invention is applied.
[FIG. 5]

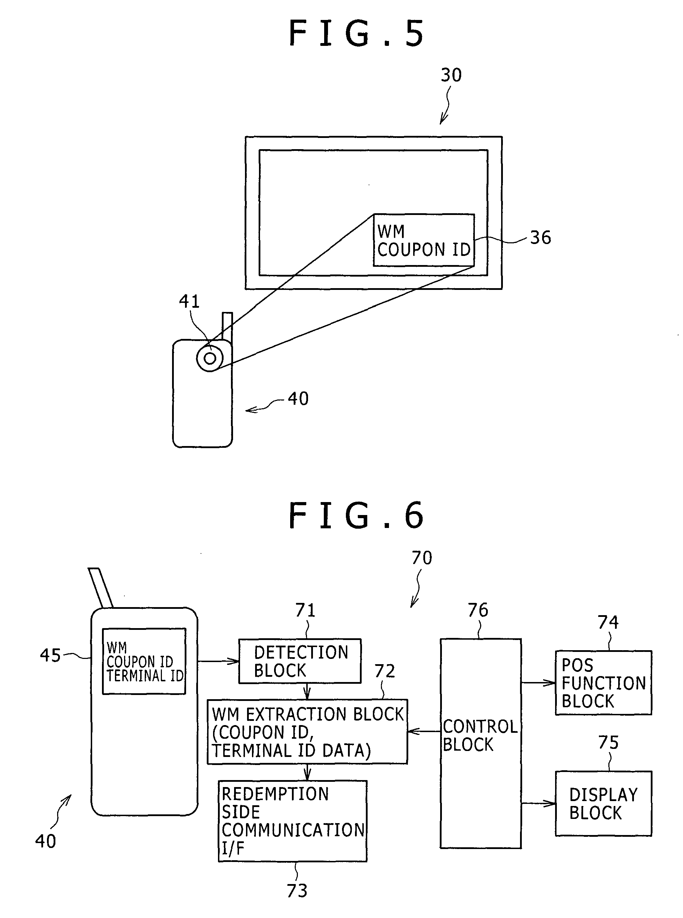

   FIG. 5 is a diagram illustrating a state in which coupon ID data is obtained by taking an image of advertisement video data displayed on a display apparatus by a mobile phone apparatus.
[FIG. 6]
   FIG. 6 is a block diagram illustrating a redemption apparatus for use in the data processing system to which the present invention is applied.
[FIG. 7]

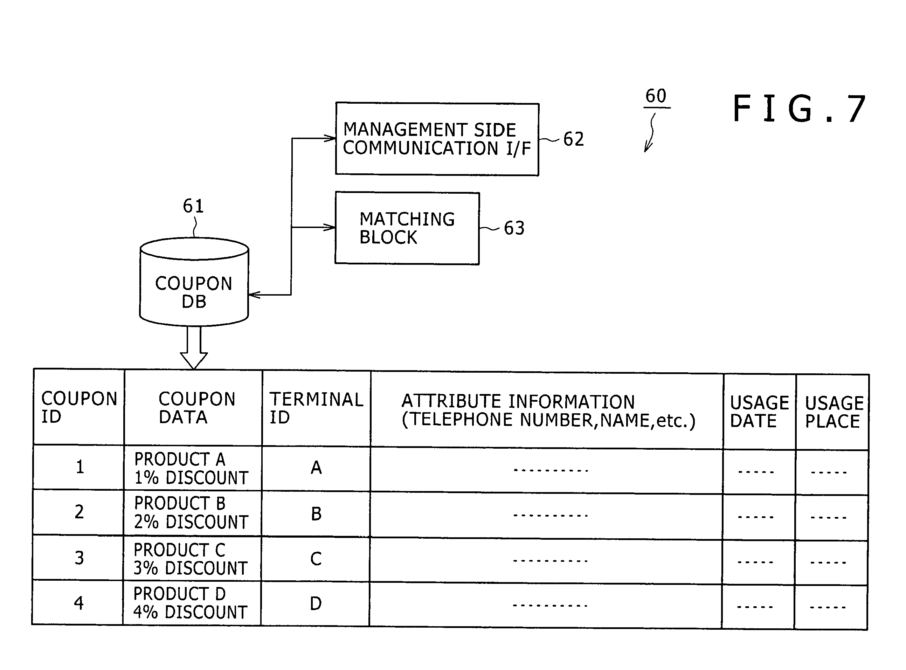

   FIG. 7 is a block diagram illustrating a coupon management apparatus for use in the data processing system to which the present invention is applied.
[FIG. 8]

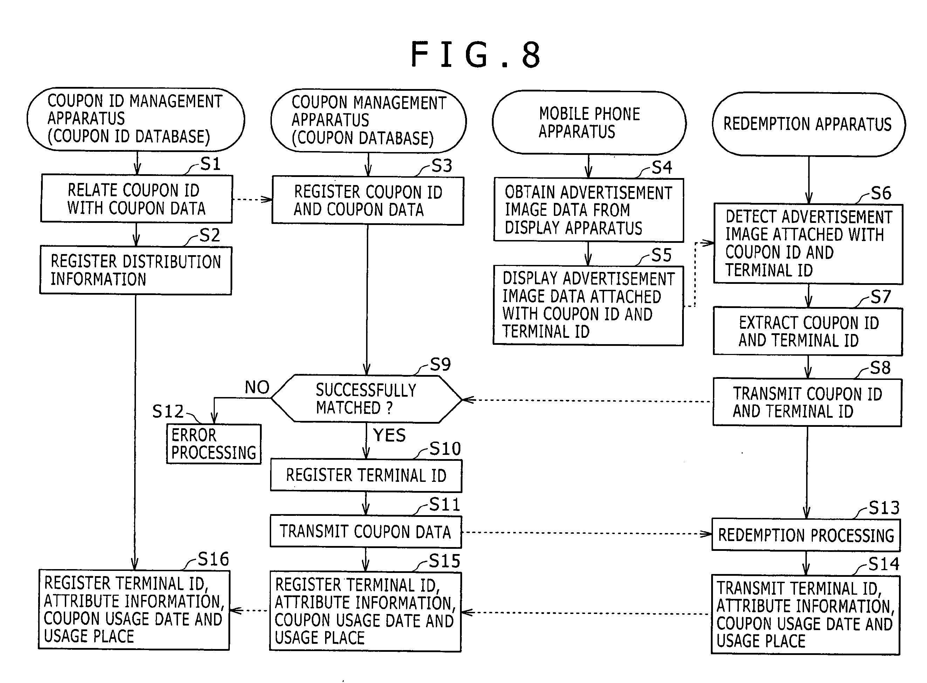

   FIG. 8 is a flowchart indicative of a processing procedure of the data processing system to which the present invention is applied.

### Best Mode for Carrying Out the Invention

As shown in FIG. 1, a data processing system 1 to which the present invention is applied is a system for distributing coupons of an advertiser by use of a system for advertisement video distribution and has a coupon ID management apparatus 10 for managing coupon ID data for identifying coupons issued by this system 1, an advertisement video data generation apparatus 20 for distributing advertisement video data embedded with the issued coupon ID data in a watermark, a display apparatus 30 for reproducing and displaying the advertisement video data embedded with the watermark, a mobile phone apparatus 40 owned by a user viewing advertisement video on the display apparatus 30, and redemption apparatus 70 for redeeming coupons obtained by the user, and a coupon management apparatus 60 for managing the issued coupon data.

The coupon ID management apparatus 10 that issues coupon ID data is made up of a computer, such as an ordinary server apparatus, and is managed by an advertisement agency for example. This coupon ID management apparatus 10, as shown in FIG. 2, has a coupon ID database 11 based on a mass-capacity hard disk drive or the like on which a database for relating coupon ID data to be issued with coupon data is built, a coupon ID issuing block 12 for issuing coupon data, a distribution information input block 13 in which the distribution information of the advertisement video data embedded with coupon ID data in watermark is entered from the coupon ID management apparatus 10 and the advertisement video data generation apparatus 20, and a redemption log input block 14 in which a redemption log to be generated when coupon data is redeemed by the coupon management apparatus 60 and the redemption apparatus 70 is entered.

The coupon ID database built on the coupon ID database 11 is configured to store the coupon ID data to be issued by relating such a redemption log therewith as coupon data defined by the contents such as product discount, the distribution information including a distribution date on which advertisement video data was distributed, distribution place, and so on, a usage date of coupon by the user, a usage place, user attribution information, and so on.

Here, the distribution information is information that is entered from the distribution information input block 13 after the issuing of coupon ID data. In this distribution information input block 13, distribution plan data defined in the advertisement video data generation apparatus 20 is entered as distribution information via a network and stores the distribution information thus entered into the coupon ID database by relating with the coupon ID data.

Also, the redemption log is information that includes the date on which coupon was used by the user, the place of use, user attribute information, and so on, which is namely information to be entered from the redemption log input block 14 when a coupon is redeemed. In this redemption log input block 14, a redemption log transmitted from the coupon management apparatus 60 or the redemption apparatus 70 via a network is entered periodically or on an as required basis, the entered redemption log being stored as related with coupon ID data.

As described above, the coupon data, distribution information, and redemption log stored in the coupon ID database as related with each other give information about the timing and place of use of coupons, thereby providing information that is given to the advertiser as the advertisement measurement information for checking advertisement effects.

The coupon ID issuing block 12 gives coupon ID data to each coupon data when coupons to be distributed are issued by use of advertisement video data and makes the above-mentioned database manage the distribution information and the redemption log as related with this coupon ID data. At the time of coupon issuance, when coupon ID data is issued as related with coupon data, the coupon ID data is related with the coupon data to be supplied to the coupon database of the coupon management apparatus 60 via recording media, the matching of the coupon ID data being executed by the coupon management apparatus 60.

Here, in the present invention, the illegal use is prevented by distributing only coupon ID data and the amounts of data processing by the mobile phone apparatus 40 and the redemption apparatus 70 are reduced by making small the data size of the data to be handled. The coupon ID data issued by this coupon ID issuing block 12 is next supplied to the advertisement video data generation apparatus 20 via a network or a recording media.

As shown in FIG. 3, the advertisement video data generation apparatus 20 is an apparatus that is managed by an advertisement agency or TV station and has an advertisement video data input device 21, a coupon ID input device 22 in which coupon ID data supplied from the coupon ID management apparatus 10 is entered, an image processing device 23 for embedding coupon ID data by watermark into advertisement video data, and a distribution device 24 for distributing the advertisement video data embedded with coupon ID data.

The advertisement video data input device 21 is a recording media reproducing device, such as a VTR, DVD (Digital Versatile Disc) player, or the like, and reproduces video data of advertisement from a magnetic tape, a DVD, or the like delivered from an advertiser or a advertisement agency and supplies the video data to the image processing device 23.

The coupon ID input device 22 is made up of a USB (Universal Serial Bus) memory reader, a memory card reader, or the like and supplies coupon ID data read from a USB memory, a memory card, or the like supplied from the coupon ID management apparatus 10 or supplied via a network to the image processing device 23.

The image processing device 23 embeds coupon ID data into advertisement video data by watermark. For example, if coupon ID data is embedded as visible information, the image processing device 23 converts coupon ID data into an image signal, namely, generates graphic images of numerals and symbols configuring the coupon ID data, places these graphic images at the bottom or in a corner for example of the frame so as not to intervene with viewing, and overlays or superimposes these graphic images on the advertisement image signal.

Also, if coupon ID data is embedded as invisible information, in coding the advertisement video data from the advertisement video data input device 21 in accordance with the so-called MPEG (Moving Picture Coding Experts Group/Moving Picture Experts Group)-2 or MPEG-4 standard, the image processing device 23 adds an error correction code to the coupon ID data from the coupon ID input device 22, and embeds, as a watermark, the coupon ID data added with the error correction code into the high-frequency component of so-called DCT (Discrete Cosine Transform) obtained at the coding. In order to be able to easily reproduce the coupon ID data, the position on the frame at which the coupon ID data is embedded is one or more so-called macro blocks at a predetermined position or, if the number of bytes of the coupon ID data is large, two or more macro blocks therearound.

Further, if the video content of advertisement is distributed as a digital signal without compression, coupon ID data is distributingly embedded in a space domain into each sample value of a video signal configuring the video content of advertisement, namely, into the least significant bit or low-order several bits of the data of each pixel.

It should be noted that, in order to extract the coupon ID data embedded by watermark, a frame for positioning is arranged in the area in which the coupon ID data was embedded. In addition, in consideration of the image taking of screen by the mobile phone apparatus 40, the coupon ID data is embedded in two or more positions of the frame. Also, the number of frames in which the coupon ID data is embedded, namely, the length (time) in one advertisement, may be one whole advertisement; because a plurality of products may be introduced in one advertisement, the length is the frame in which that product is displayed.

The advertisement video data for distribution with the coupon ID data embedded by the image processing device 23 as described above is supplied to the distribution device 24. The distribution device 24 is a transmission device in digital television broadcasting, analog television broadcasting, or satellite broadcasting or an Internet-connected computer or server having a modem in the case of the Internet, a LAN card or a wireless LAN card in the base of Ethernet, for example. Also, the distribution device 24 is such a device for recording video signals to recording media as a VTR, a CD recorder, a DVD recorder, or the like. Then, the distribution device 24 supplies the advertisement video data embedded with coupon ID data to the display apparatus 30 in a method suitable for transmission media, namely, broadcasting, Internet distribution, recording media distribution.

The display apparatus 30 shown in FIG. 1 is a display of one of various sizes that is installed in a public space, outdoor, in railroad stations or shops; for example, the advertisement video data embedded with coupon ID data distributed from the distribution device 24 is received and stored in an incorporated hard disk unit and reproduced to be displayed in accordance with a specified schedule.

In this data processing system 1, the user is a person who views advertisement video data that is reproduced while the user passes near the display apparatus 30 and, by means of the mobile phone apparatus 40 owned or managed by the user, can obtain coupon ID data from the advertisement video data displayed on the display apparatus 30.

To be more specific, as shown in FIG. 4, the mobile phone apparatus 40 has a function in which a function for extracting watermarks is stored in addition to the function of an ordinary mobile phone, having an image taking block 41 for taking an image of a subject, a non-secure memory 42 that also provides a system memory for storing image data taken by the image taking block 41, a secure memory 43 storing the terminal ID data unique to the mobile phone apparatus 40, an image processing block 44 that embeds at least terminal ID data into advertisement image data by watermark, a display block 45 for displaying the advertisement image data embedded with coupon ID data and terminal ID data by watermark, an operation block 46 that is operated by the user, and a control block 47 for controlling the entire operation.

The image taking block 41 has two or more lenses and an image pickup device such as a CCD (Charge-Coupled Device) element and a CMOS (Complementary Metal-Oxide Semiconductor) or the like and stores taken image data into the non-secure memory 42 by executing predetermined image processing and A/D conversion processing.

Further, if advertisement video data displayed on the display apparatus 30 is taken while an application for taking an image of advertisement video data by the display apparatus 30 has been invoked, a predetermined area in which coupon ID data is embedded in the advertisement video data is taken by the image taking block 41 and the taken image is stored in the non-secure memory 42 after executing compression coding processing such as JPEG (Joint Photographic Expert Group) or the like. Thus, in obtaining advertisement video data by the image taking block 41 that provides obtaining means, when the advertisement video data is taken, an area inside a frame 36 for positioning the advertisement video data displayed on the display apparatus 30, namely, an area with coupon ID data embedded by watermark is taken by the image taking block 41.

The non-secure memory 42 also provides a system memory and stores the image data and so on taken by the image taking block 41. On the other hand, the secure memory 43 is a memory incapable of rewriting and so on, in which terminal ID data and so on are stored. The non-secure memory 42 and the secure memory 43 may physically be a same memory element. Also, in the present invention, terminal ID data may be stored in the non-secure memory 42.

In presenting the advertisement image data embedded with coupon ID data and terminal ID data by watermark to the redemption apparatus 70, the image processing block 44 executes the processing of embedding at least the terminal ID data read from the secure memory 43 into the advertisement image data by watermark.

To be more specific, in embedding terminal ID data in addition to coupon ID data in advertisement image data by visible information, the image processing block 44 converts the terminal ID data into an image signal, namely, generates graphic images of numerals and symbols configuring the terminal ID data like those of the coupon ID data and overlays or superimposes the graphic images onto the advertisement image data with coupon ID data for example at the bottom or in a corner for example of the frame so as not to intervene with viewing.

It should be noted that advertisement image data is embedded with coupon ID data by visible information in advance; it is practicable for the image processing block 44 to newly add coupon ID data to the advertisement image data by watermark along with terminal ID data. In this case, the image processing block 44 first detects and deletes the coupon ID data and then generates the graphic images of coupon ID data and terminal ID data and overlays or superimposes the graphic images on the advertisement image data from which the coupon ID data has been deleted.

Further, in order to more correctly recognize coupon ID data and terminal ID data that are visible information by the detection block of the redemption apparatus 70, the image processing block 44 executes enhancement processing on the overlaid or superimposed coupon ID data and terminal ID data, namely, the edge detection of the coupon ID data and terminal ID data of the graphic images to add an overshoot or an undershoot and displays the advertisement image data with the coupon ID data and the terminal ID data enhanced onto the display block 45. Also, the enhancement processing here may be executed on only the coupon ID data embedded beforehand, overlaying or superimposing the terminal ID data on the advertisement image data by the graphic image of the same level as the edge of the coupon ID data on which the enhancement processing has been executed.

Also, if coupon ID data and terminal ID data are embedded in advertisement image data by invisible information, the image processing block 44, in storing the advertisement image data embedded with coupon ID data into the non-secure memory 42 after compression coding, adds an error correction code to the terminal ID data read from the secure memory 43 at a macro block separate from the macro block embedded with coupon ID data or at the high-frequency component having DCT coefficient of a different area and embeds the coupon ID data added with an error correction code as a watermark.

Also, if the video content of advertisement is not to be compressed, coupon ID data is distributingly embedded in a space domain into each sample value of a predetermined area of an image data configuring the advertisement image data, namely, into the least significant bit or low-order several bits of the data of each pixel.

Also, in order to more correctly recognize coupon ID data and terminal ID data that are invisible information by the detection block of the redemption apparatus 70, the image processing block 44 executes enhancement processing on the coupon ID data and the terminal ID data. In this case, the image processing block 44 executes enhancement processing of increasing the number of macro blocks or areas in which coupon ID data and terminal ID data are embedded. At least for coupon ID data, enhancement processing is executed so as to increase the number of macro blocks or areas more than the macro blocks or areas with coupon ID data embedded in the advertisement image data taken by the display apparatus 30; for terminal ID data, enhancement processing is executed to make the number of macro blocks or areas about equal to the macro blocks or areas with coupon ID data embedded.

It should be noted that, in the image processing block 44, the owner name and telephone number of the mobile phone apparatus 40, the electronic mail address, the current time, and so on, for example may be embedded by watermark, in addition to coupon ID data and terminal ID data.

The display block 45, in making presentation on the redemption apparatus 70, is configured by a LED panel, an organic EL panel, or the like, thereby displaying an operation status. Further, the display block 45 displays the advertisement image data with the coupon ID data and the terminal ID data generated by the image processing block 44 embedded by watermark.

The operation block 46, configured by pushbuttons, slide switches, and so on, enters an operation signal into the control block 47 when operated. For example, the mobile phone apparatus 40 is able to have a call with a mate by operating the operation block 46 and, in purchasing a product at a store, display the advertisement image data embedded with the coupon ID data and the terminal ID data by watermark generated by the image processing block 44 by invoking an application, the advertisement image data being detected by the detection block of the redemption apparatus 70.

It should be noted that, in the present invention, the mobile phone apparatus 40 may be a still camera apparatus having a digital or analog display block.

As shown in FIG. 6, the redemption apparatus 70 is an apparatus having a function of a POS (Point Of Sale terminal) terminal that is installed in stores for selling merchandise and has a detection block 71 for detecting advertisement image data embedded with coupon ID data and terminal ID data by watermark displayed on the display block 45 of the mobile phone apparatus 40, a watermark extraction block 72 for extracting coupon ID data and terminal ID data from the advertisement image data detected by the detection block 71, a redemption side communication I/F 73 for transmitting the coupon ID data and the terminal ID data extracted by the watermark extraction block 72 to the coupon management apparatus 60, a POS function block 74 for realizing a function as a POS terminal, a display block 75 for displaying an operation situation and so on, and a control block 76 for controlling operations of the entire coupon redemption apparatus 70.

The detection block 71 takes an image of advertisement image data embedded with coupon ID data and terminal ID data by watermark displayed on the display block 45 of the mobile phone apparatus 40 through a plurality of lenses and an image pickup device such as a CCD device or a CMOS.

The watermark extraction block 72 corrects the size, the tilt, and the distortion caused by taking in slant angles relative to the taken frame 36 in positioning the taken image data and then extracts coupon ID data and terminal ID data from the advertisement image data taken by the detection block 71.

To be more specific, if coupon ID data and terminal ID data are visible information, the watermark extraction block 72 extracts graphic images of numerals and symbols configuring overlaid or superimposed coupon ID data by means of character recognition processing and extracts the coupon ID data and the terminal ID data from the extracted graphic images.

Also, if coupon ID data and terminal ID data are invisible information, the watermark extraction block 72 executes positioning between the macro block at the time of coding for embedding coupon ID data and terminal ID data by the image processing device 23 of the advertisement video data generation apparatus 20 or the image processing block 44 of the mobile phone apparatus 40 and the macro block of the advertisement image data taken by the detection block 71 and then extracts the coupon ID data and the terminal ID data from the high-frequency component of so-called DCT coefficient obtained at the time of coding and further extracts the coupon ID data by executing error correction processing.

If advertisement video data is not compressed, positioning correction processing is executed by use of the above-mentioned frame 36 and then each sample value of the image signal, namely, the least significant bit or several low-order bits of the data of each pixel are extracted, error correction processing is executed, and the coupon ID data is extracted.

In order to execute the matching of the coupon ID data obtained from the mobile phone apparatus 40, the redemption side communication I/F 73 transmits the coupon ID data to the coupon management apparatus 60 via the network along with the terminal ID data. In addition, when the matching of the coupon ID data is found successful in the coupon management apparatus 60, the redemption side communication I/F 73 receives the coupon data related with the transmitted coupon ID data.

The POS function block 74 has a reader or the like for optically reading a barcode or the like attached to a product, for example, thereby reading a barcode or the like of a product. The display block 75 displays operation situations; for example, when coupon data is received through the redemption side communication I/F 73, the display block 75 displays the contents of the received coupon data to allow the user and a shop clerk to check the contents of the coupon and displays a symbol, such as a barcode or the like, thereby allowing the reading of the symbol through the reader or the like of the POS function block 74.

The control block 76 controls the entire operations. For example, settlement processing, such as reflecting the contents of coupon to the price of product, namely, discount processing and the like is executed.

The coupon management apparatus 60 for executing the matching of coupon ID data in response to a request from the redemption apparatus 70 has a coupon database 61 based on a mass-capacity hard disk drive or the like on which a coupon database for managing coupon ID data and coupon data by relating each other is built, a management side communication I/F 62 for executing communication with the redemption side communication I/F 73 of the redemption apparatus 70, and a matching block 63 for executing matching between the coupon ID data transmitted from the redemption apparatus 70 and the coupon ID data supplied from the coupon ID management apparatus 10, as shown in FIG. 7.

The coupon database 61 is configured to store the coupon data defined by the contents of product discount and so on, the terminal ID data of the mobile phone apparatus 40, the attribute information of the owner name and phone number of the mobile phone apparatus 40 or the like, the date on which the advertisement image data of the mobile phone apparatus 40 was read, namely, the coupon data usage date and usage place and the like, as related with the coupon ID data supplied from the coupon ID management apparatus 10. Such a coupon database stores the coupon ID data and the coupon data supplied from the coupon ID management apparatus 10 in advance and, when the coupon ID data and the terminal ID data have been transmitted from the redemption apparatus 70, stores the terminal ID data and the attribute information as related with the coupon ID data.

Also, when the coupon ID data and the terminal ID data transmitted from the redemption apparatus 70 are received in the redemption of coupons, these items of information are further registered in the coupon database as a usage date of coupon and a usage place on the basis of the reception date and the ID data of the installation place of the redemption apparatus 70.

When the user uses coupon data for redemption at a store and the coupon ID data and the terminal ID data transmitted from the redemption apparatus 70 are received, the matching block 63 executes matching, in the coupon database, between the received coupon ID data and the coupon ID data registered beforehand. Then, if a match is found between the coupon ID data registered beforehand and the coupon ID data transmitted from the mobile phone apparatus 40, registers the terminal ID data into the coupon database by relating with the coupon ID data and transmits the coupon data related with the coupon ID data to the redemption apparatus 70 via the management side communication I/F 62.

The following describes a processing procedure of the data processing system 1 to which the present invention is applied with reference to FIG. 8.

First, an advertisement agency asked by an advertiser for advertisement produces advertisement video data as well as determines the contents of a coupon such as the discount to be distributed by this advertisement video data, thereby creating coupon data. Also, the coupon data to be created is individually assigned with coupon ID data. Then, in the coupon ID management apparatus 10, coupon ID data is related with coupon data to be registered in the coupon ID database 11 in step S1.

Next, in the advertisement agency, when advertisement agency has produced the advertisement video data produced by the advertisement agency on the basis of a request from the advertiser, the advertisement agency creates the distribution information of the produced advertisement video data, namely, a schedule of the distribution of the advertisement video data when and where, entering the created distribution information into the advertisement video data generation apparatus 20 by relating with the advertisement video data. Then, in step S2, the distribution information related with by coupon ID data by the advertisement video data generation apparatus 20 is entered in the distribution information input block 13 of the coupon ID management apparatus 10, the distribution information being registered in the coupon ID database by relating with the coupon ID data.

Before the distribution of the actual advertisement video data is started, the coupon ID data and the coupon data are related with each other and supplied, via network or recording media, to the coupon management apparatus 60 from the coupon ID database of the coupon ID management apparatus 10, thereby being registered in the coupon database 61 in step S3.

As described above, the processing of step S1 through step S3 is the processing to be executed before the coupon distribution is started, namely, before the distribution of the advertisement video data is distributed. Then, in step S4, when the distribution of the advertisement video data starts, the user pauses in front of the display apparatus 30 on which the advertisement video data is reproduced and, through the image taking block 41, takes an image with the coupon ID data embedded by watermark on a screen on which the advertisement video data is reproduced by use of the mobile phone apparatus 40, storing the taken image.

In storing this advertisement image data with coupon ID data or displaying the advertisement image data stored in step S5 onto the display block 45, the mobile phone apparatus 40, as described above, further makes the advertisement image data embedded, by watermark, with the terminal ID data stored in the secure memory 43 be displayed on the display block 45 for the advertisement image data embedded, by watermark, with the coupon ID data obtained from the display apparatus 30.

Here, in visiting a store for purchasing a product advertised by the advertisement image data, the user holds the mobile phone apparatus 40 over the detection block 71 of the redemption apparatus 70 installed in this store. In doing so, in step S5, the advertisement image data embedded with the coupon ID data and the terminal ID data by watermark is displayed on the display block 45 of the mobile phone apparatus 40.

In step S6, the redemption apparatus 70 detects the advertisement image data embedded with the coupon ID data and the terminal ID data by watermark displayed on the display block 45 of the held mobile phone apparatus 40 and then, in step S7, extracts the coupon ID data and the terminal ID data embedded in the advertisement image data by watermark detected by the watermark extraction block 72. Then, in step S8, the redemption apparatus 70 transmits the extracted coupon ID data and terminal ID data to the coupon management apparatus 60 via the redemption side communication I/F 73.

Receiving the coupon ID data and the terminal ID data from the redemption apparatus 70 via the management side communication I/F 62, the coupon management apparatus 60 matches, in step S9, the received coupon ID data with the coupon ID data registered beforehand in the coupon database in the matching block 63. If a match is found between the registered coupon ID data in advance and the coupon ID data transmitted from the mobile phone apparatus 40, the matching block 63 registers the terminal ID data in the coupon database by relating with the coupon ID data and, in step S11, transmits this coupon data related with this coupon ID data to the redemption apparatus 70 via the management side communication I/F 62.

It should be noted that, if no match is found in the coupon ID data in step S9, the coupon ID data transmitted from the mobile phone apparatus 40 is regarded invalid, upon which an error message is transmitted to the redemption apparatus 70, thereby preventing the redemption apparatus 70 from executing redemption processing, namely, the settlement by use of coupons.

Receiving, via the redemption side communication I/F 73, the coupon data transmitted from the coupon management apparatus 60, the redemption apparatus 70 executes coupon data redemption processing in step S13. Namely, the redemption apparatus 70 executes the settlement processing by reflecting the contents of coupon data, such as discount and so on. Then, in step S 14, the redemption apparatus 70 transmits, via the redemption side communication I/F 73, the terminal ID data, user attribute information such as the owner name of the mobile phone apparatus 40, telephone number, and so on, coupon usage time, the usage place identified by the installation place of the redemption apparatus 70, and so on obtained by the store at the time of purchasing a product to the coupon management apparatus 60.

It should be noted that, as described above, it is also practicable to further embed, by watermark, the attribute information into the advertisement image data embedded with the coupon ID data and the terminal ID data by watermark displayed on the display block 45 of the mobile phone apparatus 40 and supply the resultant advertisement image data to the redemption apparatus 70 in the processing of steps S6, 7, and 8.

Receiving, via the management side communication I/F 62, the terminal ID data, the user attribute information, coupon usage date, usage place, and so on obtained by the store at the time of purchasing a product, the coupon management apparatus 60 registers these items of data in the coupon database in step S 15. Also, the coupon management apparatus 60 transmits the contents of the registration in the coupon database to the coupon ID management apparatus 10 periodically or as required basis and, in step S16, when the contents of the registration in the coupon database are entered from the redemption log input block 14, the coupon ID management apparatus 10 registers the received registration contents into the coupon ID database 11.

Thus, in the coupon management apparatus 60 and the coupon ID management apparatus 10, when and where the issued coupons were obtained and used can be known on the basis of the data managed by the databases, thereby providing the information to the advertiser as the advertisement measurement information for checking advertisement effects.

In the data processing system 1 as described above, because coupon ID data can be distributed by reproducing, on the display apparatus 30, the advertisement video data embedded with coupon ID data by watermark, especially a prior-art apparatus may be used for the display apparatus 30. Also, because the mobile phone apparatus 40 that obtained the coupon ID data embedded in advertisement video data by watermark embeds terminal ID data into the advertisement image data by watermark in addition to the coupon ID data, illegal copy can be prevented. Further, with this data processing system 1, the distribution and redemption of electronic coupons usable only the mobile phone apparatus 40 of the user who viewed the advertisement video data can be realized by relating coupon ID data with terminal ID data. Further, in the coupon ID management apparatus 10 and the coupon management apparatus 60, a redemption log is managed by relating with coupon ID data, so that a reliable advertisement effects measuring method can be realized by identifying the attributes of advertisement viewers. Further, when the user wants to use a coupon, the advertisement image data embedded with coupon ID data and terminal ID data by watermark displayed on the display block 45 of the mobile phone apparatus 40 may only be held over the detection block 71 of the redemption apparatus 70, thereby saving the user the cost of carrier communication.

It should be noted that the terminal ID data described above may be the ID data uniquely allocated to the mobile phone apparatus 40 or the ID data of an IC card used in IC card systems.

Also, in the example described above, an example of a watermark technology for compressed and non-compressed images has been explained; it is also practicable to employ other watermark embedding processing methods, processes, and technologies.

Also, in the example described above, an example of reproducing advertisement video data by the display apparatus 30 has been explained; it is also practicable that the advertisement media with watermark is paper posters or electronic posters.

## Claims

1. A data processing system comprising:
an advertisement data generation apparatus for generating advertisement data embedded, by watermark, with coupon ID data assigned to each coupon;
a terminal apparatus having
an advertisement media for providing said advertisement data embedded with said coupon ID data,
acquisition means for acquiring advertisement image data from advertisement data provided in said advertisement media,
storage means for storing terminal ID data and the advertisement image data acquired by said acquisition means,
image processing means for further embedding, by a watermark, said terminal ID data into said advertisement image data, and
display means for displaying advertisement image data embedded, by a watermark, with said coupon ID data and said terminal ID data;
a redemption apparatus having
detection means for detecting advertisement image data displayed on display means of said terminal apparatus,
extraction means for extracting said coupon ID data and said terminal ID data from the advertisement image data detected by said detection means, and
redemption side communication means for transmitting said coupon ID data and said terminal ID data extracted by said extraction means and transmitting a log obtained at the redemption of a coupon related with said coupon ID data, thereby redeeming the coupon related with said coupon ID data; and
a coupon management apparatus having
a coupon database for managing said coupon data by relating with said coupon ID data,
matching means for executing matching of coupon ID data transmitted from said redemption apparatus by accessing said coupon database, and
management side communication means for transmitting, if a match is found by said matching means, coupon data related with this coupon ID data to said redemption apparatus.

2. The data processing system according to claim 1, wherein said terminal apparatus has enhancement processing means for executing enhancement processing on at least coupon ID data embedded as said watermark when displaying on said display means and
said enhancement processing means allows said terminal ID data to be displayed on said display means with an approximately the same level as the enhancement processing of said coupon ID data, along with said enhancement-processed coupon ID data.

3. The data processing system according to claim 2, wherein, if said watermark is visible, said enhancement processing means executes edge enhancement processing on said coupon ID data, generates said terminal ID data with an edge enhanced to an approximately the same level as coupon ID data on which this edge enhancement processing was executed, and makes said advertisement image data be displayed on said display means with said coupon ID data and said terminal ID data enhanced in edge.

4. The data processing system according to claim 2, wherein, if said watermark is invisible, the number of areas in which said coupon ID data and said terminal ID data are embedded is increased over the number of areas in which said coupon ID data of advertisement data displayed on said advertisement media, thereby displaying said advertisement image data on said display means.

5. A data processing method comprising:
a step of generating advertisement data with coupon ID data embedded by a watermark given to each coupon;
a step of providing, by an advertisement media, said advertisement data embedded with said coupon ID data;
a step of acquiring, by an image taking means of a terminal apparatus, advertisement image data from advertisement data provided in said advertisement media and storing the advertisement image data into storage means in which terminal ID data is stored;
a step of further embedding, by a watermark said terminal ID data into said advertisement image data stored in said storage means by said terminal apparatus;
a step of displaying, onto a display means of said terminal apparatus, advertisement image data further embedded with said terminal ID data in addition to advertisement image data embedded with said coupon ID data;
a step of detecting advertisement image data displayed on display means of said terminal apparatus by a redemption apparatus at the time of redemption and extracting said coupon ID data and said terminal ID data from the advertisement image data detected;
a step of transmitting said extracted coupon ID data and said terminal ID data to a data management apparatus, accessing a database managing said coupon data by relating with said coupon ID data of this data management apparatus, and making a match with the coupon ID data transmitted from said redemption apparatus; and
a step of transmitting, if a match is found, the coupon data related with this coupon ID data to said redemption apparatus.

6. The data processing method according to claim 5, further comprising the steps of:
executing enhancement processing on said coupon ID data when displaying, on said display means of said terminal apparatus, the coupon ID data embedded as said watermark onto said display means; and
displaying said terminal ID data with approximately the same level as the enhancement processing of said coupon ID data onto said display means.
